Europäisches Patentamt

European Patent Office

Office européen des brevets

(11) Veröffentlichungsnummer: **0 379 150**
**A2**

(12) **EUROPÄISCHE PATENTANMELDUNG**

(21) Anmeldenummer: 90100844.1

(22) Anmeldetag: 16.01.90

(51) Int. Cl.⁵: **B01L 9/00**

(30) Priorität: 19.01.89 DE 3901512

(43) Veröffentlichungstag der Anmeldung:
25.07.90 Patentblatt 90/30

(84) Benannte Vertragsstaaten:
AT BE CH DE ES FR GB GR IT LI LU NL SE

(71) Anmelder: STILLER KUNSTSTOFFTECHNIK
UND FORMENBAU GMBH
Am Stammholz 4
D-6980 Wertheim(DE)

(72) Erfinder: Stiller, Gerhard
Gaisbergstrasse 5
D-6983 Kreuzwertheim(DE)

(74) Vertreter: Tiedtke, Harro, Dipl.-Ing. et al
Patentanwaltsbüro Tiedtke-Bühling-Kinne-
Grupe-Pellmann-Grams-Struif Bavariaring 4
Postfach 20 24 03
D-8000 München 2(DE)

(54) Vorrichtung zum Zusammenhalten von zwei Rohrenden.

(57) Bei einer Vorrichtung zum Zusammenhalten von zwei ineinandergesteckten Rohrenden, die jeweils mit einem Eingriffsmittel versehen sind, sind zwei äußere Ringe vorgesehen, die jeweils mit einem der beiden Eingriffsmittel in Eingriff stehen sowie ein die beiden äußeren Ringe verbindender dritter Ring, der einstückig mit den beiden äußeren Ringen verbunden ist und diese in praktisch nicht veränderbarem Abstand voneinander hält. Die Ringe weisen eine Öffnung auf, durch die in Radialrichtung die verbundenen Rohrenden unter Aufweitung des Ringes eingeschoben werden kann. Auf der Innenseite der Vorrichtung definieren die drei Ringe eine konische Ringnut, die im Eingriffszustand eine Anpassung an unterschiedliche axiale Abstände zwischen den Eingriffsmitteln ermöglicht.

Fig. 4

## VORRICHTUNG ZUM ZUSAMMENHALTEN VON ZWEI ROHRENDEN

Die Erfindung bezieht sich auf eine Vorrichtung zum Zusammenhalten von zwei Rohrenden gemäß dem Oberbegriff von Patentanspruch 1.

Eine solche Vorrichtung ist bekannt (CH-647 732-A5). Sie findet insbesondere Anwendung im Laborbetrieb zum Zusammenhalten von zwei Rohrenden aus Glas, die ineinandergesteckt sind und aufgrund von angeschliffenen, konischen Flächen, die aneinander anliegen, eine dichte Verbindung bilden. Sofern im Inneren der Rohrenden kein Überdruck herrscht, ist diese Steckverbindung ausreichend dicht und fest. Für den Fall, daß im Inneren der Rohrenden ein Überdruck herrscht, ist es jedoch zweckmäßig, die miteinander verbundenen Rohrenden mit Hilfe der gattungsgemäßen Vorrichtung zusammenzuhalten. Beispielsweise weist das eine Rohrende einen radialen, umlaufenden Flansch auf, während das andere, in das vorstehend genannte Rohrende eingesteckte eine Ringschulter aufweist. Der eine Ring der gattungsbildenden Vorrichtung greift dann an der Schulter an, während der andere an dem Flansch angreift und dadurch ein Trennen der beiden Rohrenden in deren Axialrichtung, die zugleich die Richtung der Achse der Vorrichtung ist, verhindert.

Bei der bekannten Vorrichtung ist die Verbindungseinrichtung in Form von mehreren seitlich überstehenden Bögen ausgebildet, die jeweils an ihren beiden Enden mit dem einen oder dem anderen der beiden Ringe verbunden sind. Dies ermöglicht eine Änderung des axialen Abstandes zwischen den beiden Ringen und somit eine Anpassung an die Eingriffsmittel der Rohrenden. Es hat sich jedoch gezeigt, daß die bekannte Vorrichtung verhältnismäßig schwierig handhabbar ist und daß auch das sichere Zusammenhalten noch verbesserungsbedürftig ist.

Der Erfindung liegt die Aufgabe zugrunde, die gattungsgemäße Vorrichtung derart auszubilden, daß sie einerseits einfach handhabbar ist und andererseits die Rohrenden mit hoher Zuverlässigkeit zusammenhält.

Diese Aufgabe wird erfindungsgemäß durch die Vorrichtung mit den Merkmalen gemäß Patentanspruch 1 gelöst.

Bei der erfindungsgemäßen Vorrichtung sind der erste und der zweite Ring durch den dritten Ring miteinander verbunden, der sich in Umfangsrichtung über praktisch die gleiche Länge erstreckt wie der erste und der zweite Ring. Dieser dritte Ring sorgt für eine in Axialrichtung verhältnismäßig feste Verbindung zwischen dem ersten und dem zweiten Ring und somit dafür, daß der erste und der zweite Ring relativ zueinander kaum bewegbar sind, d.h. steif miteinander verbunden sind. Diese hohe Festigkeit und Steifigkeit der Verbindung zwischen dem ersten und dem zweiten Ring sorgt für hohe Zuverlässigkeit des Zusammenhaltens mittels der Vorrichtung. Allerdings kann sich der Abstand zwischen dem ersten und dem zweiten Ring nicht mehr unterschiedlichen axialen Abständen zwischen den Eingriffsmitteln an den Rohrenden anpassen. Für die Anpassung der Vorrichtung an solche unterschiedlichen Abstände ist jedoch dennoch gesorgt, nämlich durch die Ausbildung des Zwischenraumes als Ringnut mit konischem Profil, das sich radial nach innen erweitert, so daß die Eingriffsmittel bis zum Kontakt mit den Flanken der Ringnut mehr oder weniger tief in diese eindringen können. Dies heißt mit anderen Worten, daß die beiden Nutflanken zuverlässig mit den Eingriffsmitteln an den beiden Rohrenden in Eingriff treten können, selbst wenn von Anwendungsfall zu Anwendungsfall der axiale Abstand zwischen diesen Eingriffsmitteln unterschiedlich ist. Schließlich ist durch die erfindungsgemäße Ausbildung dafür gesorgt, daß die Vorrichtung sicher erfaßt und einfach gehandhabt werden kann.

Vorteilhafte Ausgestaltungen der Erfindung sind in den Unteransprüchen gekennzeichnet.

Ein Ausführungsbei spiel der Erfindung ist in den Zeichnungen dargestellt und wird im folgenden näher erläutert. Es zeigen:

Fig. 1 eine Schnittdarstellung gemäß A-B in Fig. 2 durch das Ausführungsbeispiel der Erfindung;

Fig. 2 eine Ansicht der Vorrichtung von links in Fig. 1;

Fig. 3 eine Draufsicht auf die Vorrichtung, wobei Fig. 3 hinsichtlich eines Merkmals im Vergleich zu Fig. 2 abgewandelt ist; und

Fig. 4 schematisch die Benutzung der Vorrichtung zum Zusammenhalten von zwei Rohrenden.

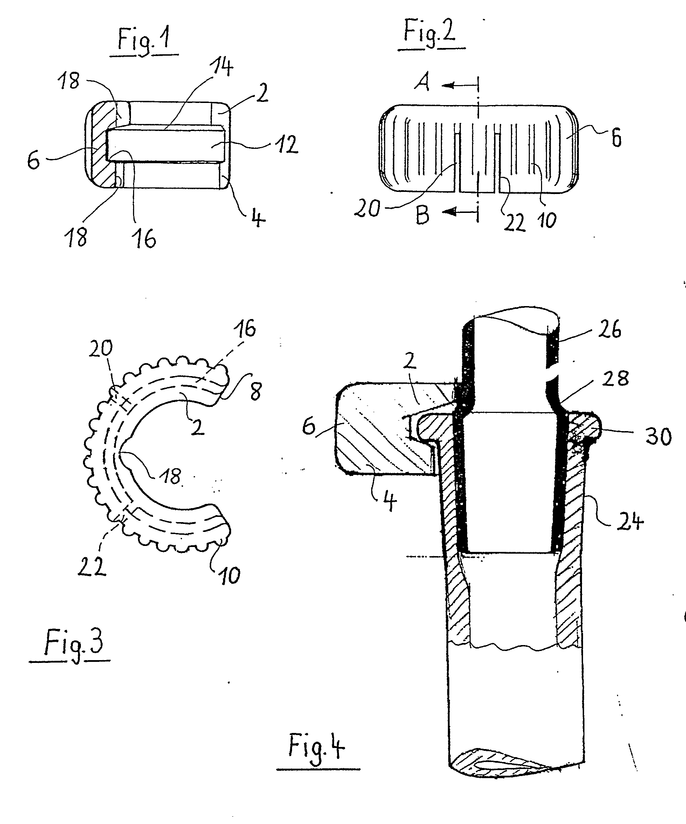

Die Vorrichtung umfaßt einen ersten Ring 2, einen zweiten Ring 4 sowie einen dritten Ring 6 und ist einstückig aus einem elastischen Kunststoff gefertigt. Die drei Ringe sind koaxial zueinander angeordnet, wobei die Achse der Vorrichtung senkrecht zur Zeichenebene von Fig. 3 durch den Mittelpunkt der Ringe verläuft. Jeder der drei Ringe weist eine von innen nach außen verlaufende und somit radiale Öffnung auf, von denen in Fig. 3 die Öffnung 8 des ersten Ringes erkennbar ist. Diese drei Öffnungen sind in Axialrichtung miteinander fluchtend ausgebildet. Der dritte Ring 6 ist ein zylindrischer Ring. Auf seiner äußeren Mantelfläche sind in Axialrichtung verlaufende Rippen 10 ausgebildet, die gleichmäßig über den gesamten Umfang der Vorrichtung verteilt sind und das Erfassen der Vorrichtung erleichtern sollen. Die Oberseite des ersten Ringes 2 und die Unterseite des zweiten Ringes 4 verlaufen im wesentlichen parallel zueinander. Die Innendurchmesser dieser Ringe sind unterschiedlich, und zwar ist beim dargestellten Ausführungsbeispiel der Innendurchmesser des ersten Ringes 2 kleiner als der Innendurchmesser des zweiten Ringes 4.

Der erste Ring 2 und der zweite Ring 4 werden vom dritten Ring 6 parallel zueinander im Abstand voneinander gehalten, wobei die drei Ringe 2, 4 und 6 gemeinsam eine umlaufende Ringnut 12 begrenzen, die ebenso wie die Ringe 2, 4 und 6 selber im Bereich der Öffnung 8 unterbrochen ist. Auch die Ringnut 12 ist koaxial ausgebildet. Sie hat einen im wesentlichen ebenen Boden, der durch die innere Mantelfläche des Ringes 6 gebildet ist, sowie zwei Nutflanken 14 und 16, deren Abstand voneinander sich zunehmend radial nach innen vergrößert, so daß die Ringnut 12 ein konisches Profil hat.

Auf der Innenseite der Vorrichtung ist in den Rändern des ersten und zweiten Ringes 2 bzw. 4 eine in Axialrichtung verlaufende Ausnehmung 18 ausgebildet, die sich ungefähr in der Umfangsmitte der Vorrichtung befindet. Diese Ausnehmung 18 hat die Funktion, die Anordnung aus den drei Ringen zu schwächen, damit diese einfacher elastisch aufgeweitet bzw. aufgebogen werden kann.

Dem gleichen Zweck dienen zwei Schlitze 20 und 22, die in einer Ebene liegen, die auch die Achse der Vorrichtung einschließt und beim dargestellten Ausführungsbeispiel von unten in die Vorrichtung geschnitten sind, so daß der Schlitzboden in dargestellter Weise senkrecht zur Achse der Vorrichtung verläuft. Die beiden Schlitze 20 und 22 sind symmetrisch in der Vorrichtung ausgebildet. Sie können sich nahe der Umfangsmitte der Vorrichtung befinden, wie dies in Fig. 2 gezeigt ist, oder auch einen größeren Abstand voneinander haben, wie dies als Abwandlung in Fig. 3 gezeigt ist. Dieser Abstand beträgt in Umfangsrichtung vorzugsweise 90°.

Der Öffnungswinkel der konischen Ringnut beträgt vorzugsweise 20°, so daß die Nutflanken 14 und 16 jeweils vorzugsweise mit der Achse der Vorrichtung einen Winkel von 80° bzw. 100° einschließen.

Während die vorstehend beschriebene Vorrichtung zwei Rohr enden zusammenhält, nehmen die beiden Rohrenden 24 und 26 sowie die vorstehend beschriebene Vorrichtung die schematisch in Fig. 4 gezeigten Relativstellungen zueinander ein. Das Rohrende 26 ist in das Rohrende 24 gesteckt und weist eine umlaufende Schulter 28 auf, während das Rohrende 24 einen umlaufenden Flansch 30 aufweist, wobei die Schulter 28 und der Flansch 30 die für den Eingriff mit der Vorrichtung bestimmten Eingriffsmittel bilden. Der zweite Ring 4 greift mit seiner Nutflanke 16 am Flansch 30 an, während der erste Ring 2 mit der Kante am Übergang zwischen seiner Nutflanke 14 und seiner inneren Umfangsfläche an der Schulter 28 angreift.

Um die Vorrichtung in die in Fig. 4 gezeigte Stellung zu bringen, wird sie seitlich, d.h. senkrecht zur Achse der beiden Rohrenden bzw. zu ihrer eigenen Achse auf den Verbindungsbereich zwischen den beiden Rohrenden aufgeschoben, wobei die Rohrenden mit ihren Eingriffsmitteln durch die seitlichen Öffnungen der drei Ringe 2, 4 und 6 in den Innenraum der Vorrichtung eintreten. Dabei kommen die radial inneren Ränder der Öffnungen der Ringe 2, 4 und 6 in Kontakt mit der Außenseite der beiden Rohrenden und ggf. des Flansches 30, so daß die Vorrichtung radial etwas aufgeweitet wird, bis die beiden Rohrenden in die Vorrichtung eingetreten sind und diese aufgrund ihrer Elastizität sich soweit schließt, daß der erste und der zweite Ring 2 bzw. 4 in Eingriff mit den Eingriffsmitteln in Form der Schulter 28 und des Flansches 30 steht. Getrennt wird die Vorrichtung von den bei den Rohrenden in zum vorstehend beschriebenen Aufsätzen der Vorrichtung analoger Weise.

Bei einer Vorrichtung zum Zusammenhalten von zwei ineinandergesteckten Rohrenden, die jeweils mit einem Eingriffsmittel versehen sind, sind zwei äußere Ringe vorgesehen, die jeweils mit einem der beiden Eingriffsmittel in Eingriff stehen sowie ein die beiden äußeren Ringe verbindender dritter Ring, der einstückig mit den beiden äußeren Ringen verbunden ist und diese in praktisch nicht veränderbarem Abstand voneinander hält. Die Ringe weisen eine Öffnung auf, durch die in Radialrichtung die verbundenen Rohrenden unter Aufweitung des Ringes eingeschoben werden kann. Auf der Innenseite der Vorrichtung definieren die drei Ringe eine konische Ringnut, die im Eingriffszustand eine Anpassung an unterschiedliche axiale Abstände zwischen den Eingriffsmitteln ermöglicht.

## Ansprüche

1. Vorrichtung zum Zusammenhalten von zwei Rohrenden, die jeweils mit einem Eingriffsmittel in Form einer Schulter oder eines Flansches versehen sind, mit einem ersten und einem zweiten Ring, wobei diese beiden Ringe voneinander beabstandet und koaxial zueinander angeordnet sind, und mit einer Verbindungseinrichtung zum Verbinden der beiden Ringe miteinander, wobei beide Ringe auf der gleichen Seite jeweils eine radiale Öffnung auf weisen, zwischen sich einen Zwischenraum zur Aufnahme der Eingriffsmittel definieren und elastisch so weit aufbiegbar sind, daß die Eingriffsmittel an den Rohrenden seitlich bzw. radial durch die Öffnungen in den Zwischenraum einschiebbar sind, dadurch gekennzeichnet, daß das Verbindungsmittel ein dritter, koaxial angeordneter Ring (6) ist, der einstückig mit den radial äußeren Rändern sowohl des ersten als auch des zweiten Ringes (2 bzw. 4) ausgebildet ist und sich in Umfangsrichtung über im wesentlichen denselben Umfangsabschnitt wie der erste und der zweite Ring erstreckt, und daß der Zwischenraum eine im Bereich der Öffnungen (8) unterbrochene Ringnut (12) ist, deren Nutflanken (14, 16) nach radial innen einen zunehmend größeren Abstand voneinander haben.

2. Vorrichtung nach Anspruch 1, dadurch gekennzeichnet, daß der erste Ring (2) und der zweite Ring (4) verschiedene Innendurchmesser haben.

3. Vorrichtung nach Anspruch 1 oder 2, dadurch gekennzeichnet, daß auf der äußeren Mantelfläche des dritten Ringes (6) Vorsprünge (10) angeordnet sind.

4. Vorrichtung nach Anspruch 3, dadurch gekennzeichnet, daß die Vorsprünge als axial verlaufende Rippen (10) ausgebildet sind.

5. Vorrichtung nach einem der Ansprüche 1 bis 4, gekennzeichnet durch eine schwächende, in Axialrichtung verlaufende Ausnehmung (18) im Bereich der Umfangsmitte der Vorrichtung.

6. Vorrichtung nach Anspruch 5, dadurch gekennzeichnet, daß die Ausnehmung (18) in den Innenrändern des ersten und des zweiten Ringes (2 bzw. 4) ausgebildet ist.

7. Vorrichtung nach einem der Ansprüche 1 bis 6, gekennzeichnet durch schwächende Schlitze (20, 22) in zumindest einem der drei Ringe (2, 4, 6).

8. Vorrichtung nach Anspruch 7, dadurch gekennzeichnet, daß die Schlitze (20, 22) jeweils in einer die Achse der Vorrichtung enthaltenen Ebene ausgebildet sind und der Schlitzgrund im wesentlichen senkrecht zu der Achse verläuft.

9. Vorrichtung nach Anspruch 8, dadurch gekennzeichnet, daß zwei Schlitze (20, 22) im Abstand von ungefähr 90° symmetrisch ausgebildet sind.

10. Vorrichtung nach einem der Ansprüche 1 bis 9, dadurch gekennzeichnet, daß jede der beiden Nutflanken (14, 16) einen Winkel ungleich 90° mit der Achse der Vorrichtung einschließt.

11. Vorrichtung nach Anspruch 10, dadurch gekennzeichnet, daß der eingeschlossene Winkel 80° bzw. 100° beträgt.

12. Vorrichtung nach einem der Ansprüche 1 bis 11, dadurch gekennzeichnet, daß die drei Ringe (2, 4, 6) einstückig aus einem elastischen Kunststoff gefertigt sind.

Fig.1

Fig.2

Fig.3

Fig.4